# EUROPÄISCHE PATENTSCHRIFT

(11) **EP 2 644 229 B1**
(45) Veröffentlichungstag und Bekanntmachung des Hinweises auf die Patenterteilung: **24.10.2018**
(21) Anmeldenummer: 13161181.6
(22) Anmeldetag: 26.03.2013
(51) Int. Cl.: A62B 35/00, F16G 11/14, A63B 9/00

(54) **Seilaufhängung an Bäumen/Stangen**
Rope suspension on trees/bars
Suspension de câble à des arbres/barres

(30) Priorität: 30.03.2012 DE 102012205309
(43) Veröffentlichungstag der Anmeldung: 02.10.2013
(73) Patentinhaber: Bornack GmbH & Co. KG, 74360 Ilsfeld (DE)
(72) Erfinder: Bornack, Klaus, 74394 Schreyerhof (DE)
(74) Vertreter: Dilg, Haeusler, Schindelmann Patentanwaltsgesellschaft mbH

(56) Entgegenhaltungen:
- WO-A1-03/045504
- WO-A1-2007/104808
- WO-A2-2006/042889
- DE-A1-102009 048 058
- DE-B4- 10 220 758
- DE-U1-202010 013 040

## Beschreibung

Die vorliegende Erfindung betrifft das technische Gebiet der Aufhängung und Befestigung von Seilen an einer Stützstruktur, insbesondere die Aufhängung und Befestigung von Sicherungsseilen an Bäumen oder Stangen in einem Klettergarten.

In Klettergärten, auch Kletterwälder genannt, werden Sicherungsseilen benötigt, um die Gäste gegen Abstürzen zu schützen. Die Gäste werden beispielsweise mit einem Sicherheitsgurt ausgerüstet und mittels Karabiner mit einem Seilläufer verbunden, der entlang eines Sicherungsseils über dem Kletterweg mitlaufen kann. Die Sicherungsseile verlaufen üblicherweise durch Rohrhülsen, die an den Bäumen oder Stangen befestigt sind.

Die Sicherheit kann durch Abnutzung der Sicherungsseile gefährdet werden. Abnutzung der Sicherungsseile entsteht nicht nur während Gebrauchs, sondern auch wenn die Bäume oder Stangen im Klettergarten, zwischen denen die Sicherungsseile verlaufen, sich beispielsweise aufgrund von starkem Wind oder Sturm stark bewegen. Wenn die Bäume sich im Sturm bewegen und dadurch biegen, kann es beispielsweise zu starker Reibung zwischen die Kante einer Rohrhülse und das durch die Rohrhülse geführtes Seil kommen. Diese Reibung ist insbesondere darauf zurückzuführen, dass die Richtung der Rohrhülse verändert wird oder das Seil in der Rohrhülse hin und hergezogen wird, wenn der Baum im Sturm hin und her schwankt. Dadurch wird das durch die Rohrhülse geführtes Seil abgeknickt bzw. es entsteht Abrieb an Rohrhülse und Seil.
Das Austauschen eines abgenutzten Sicherungsseils ist öfters mit großem Aufwand verbunden, da jedes Sicherungsseil an mehreren Bäumen zwischen Anfang und Ende des Seils vorbeigeführt wird. Folglich muss das neue Sicherungsseil nicht nur an zwei "Endbäumen" sondern auch an jedem "Zwischenbaum" neu befestigt bzw. aufgehängt werden.

DE 10 2009 048 058 A1 offenbart eine Befestigungsvorrichtung für ein fortlaufendes Selbstsicherungssystem in einem Seilgarten, welches zur Befestigung eines Seils an einen Masten, Baum, Gebäude, Fels oder sonstigem ausgebildet ist. Die Befestigungsvorrichtung weist ein Grundbauteil auf, das mit Hilfe von Befestigungsmitteln an zum Beispiel einem Baum befestigbar ist. Die Befestigungsvorrichtung weist ferner einen Ausleger auf, der an dem Grundbauteil angebracht ist. Die Befestigungsvorrichtung weist ferner wenigstens ein Führungs- oder Haltemittel auf, das an dem Ausleger angebracht ist und an welchem das Seil geführt oder fest anbringbar ist. Der Ausleger ist an dem Grundbauteil und/oder an dem Führungs- oder Haltemittel an dem Ausleger senkrecht zu einer durch das Führungs- oder Haltemittel vorgegebenen Laufrichtung eines an der Befestigungsvorrichtung befestigbaren Seils schwenkbar.

DE 20 2010 013 040 U1 beschreibt mehrere Ausführungsformen eines Ringankers und zeigt zum Beispiel eine Vorrichtung zum Befestigen eines Seils an einer Stützstruktur. Die Vorrichtung weist eine in zwei Achsen freischwingende Zugkraftübertragungseinrichtung auf, die an der Stützstruktur befestigt ist. Die Vorrichtung weist ferner eine Seilbefestigungseinrichtung auf, die mit der Zugkraftübertragungseinrichtung gekoppelt ist und an der das Seil befestigt ist. Wenn die Stützstruktur bewegt wird, wird die Orientierung des Seils und der Zugkraftübertragungseinrichtung relativ zu einander unverändert bleiben.

Der vorliegenden Erfindung liegt die Aufgabe zugrunde, eine Seilbefestigung bereitzustellen, die Abnutzung eines Seils reduziert bzw. vermeidet und ein einfaches Austauschen von einem abgenutzten Seil ermöglicht.

Diese Aufgabe wird gelöst durch den Gegenstand des unabhängigen Patentanspruchs. Vorteilhafte Ausführungsformen der vorliegenden Erfindung sind in den abhängigen Patentansprüchen beschrieben.

Gemäß einem ersten Aspekt der Erfindung wird eine Vorrichtung zum Befestigen eines Seils an einer Stützstruktur, insbesondere zum Befestigen eines Sicherungsseils, beschrieben. Die Vorrichtung weist (a) ein Seil (11), ein flexibles Band oder eine Kette als Zugkraftübertragungseinrichtung, die zum Befestigen an der Stützstruktur derart angepasst ist, dass zumindest ein Teil der Zugkraftübertragungseinrichtung in zwei Achsen freischwingend ist, und (b) eine Seilbefestigungseinrichtung, die mit der Zugkraftübertragungseinrichtung gekoppelt ist und an der ein weiteres Seil befestigbar ist. Die Seilbefestigungseinrichtung weist eine Rohrhülse als Seilführungselement zum Aufnehmen des weiteren Seils, wobei in der Rohrhülse ein Ende des weiteren Seils empfangen werden kann, so dass das Seilende des weiteren Seils sicher befestigbar ist, ein Koppelelement zum Koppeln der Seilbefestigungseinrichtung und der Zugkraftübertragungseinrichtung und eine längliche Konsole als Verbindungselement, welche die Rohrhülse als Seilführungselement mit dem Koppelelement verbindet, auf. Das Koppelelement weist einen Haken auf, welcher insbesondere mittels eines zum Rand des Koppelelements hin offenen Schlitzlochs gebildet wird, wobei die Zugkraftübertragungseinrichtung an dem Haken koppelbar ist, um eine Zugkraft zwischen der Zugkraftübertragungseinrichtung und dem Koppelelement zu übertragen. Die Seilbefestigungseinrichtung ist mit der Zugkraftübertragungseinrichtung derart gekoppelt, dass ein Winkel zwischen einer Tangente bzw. Seilrichtung eines an der Seilbefestigungseinrichtung befestigten Seils und einer Längsachse der Seilbefestigungseinrichtung unverändert bleibt, wenn sich die Stützstruktur bewegt, an der die Zugkraftübertragungseinrichtung befestigt ist.

Der beschriebenen Vorrichtung liegt die Erkenntnis zugrunde, dass, wenn zumindest ein Teil der Zugkraftübertragungseinrichtung in zwei Achsen freischwingend ist, eine Veränderung der Winkel zwischen Seilrichtung und einer Längsachse der Seilbefestigungseinrichtung aufgrund von Bewegung der Stützstruktur vermieden werden kann. Somit wird Reibung zwischen der Seilbefestigungseinrichtung und dem Seil aufgrund von Bewegung der Stützstruktur vermieden.

Insbesondere bedeutet dies, dass Reibung vermieden werden kann sowohl bei Bewegungen der Stützstruktur in Richtungen, die im Wesentlichen parallel zu der Längsachse des Sicherungsseils sind, als auch bei Bewegungen der Stützstruktur in Richtungen, die im Wesentlichen quer zu der Längsachse des Sicherungsseils sind.

Die Zugkraftübertragungseinrichtung ist eine Einrichtung, die nur oder hauptsächlich zur Übertragung von Zugkräften an, von und/oder zwischen Elemente dient, die mit der Zugkraftübertragungseinrichtung gekoppelt sind. Insbesondere bedeutet dies, dass die Zugkraftübertragungseinrichtung keine Druckkräfte oder Biegekräfte an und von der Stützstruktur überträgt.

Die Zugkraftübertragungseinrichtung ist zum derartigen Befestigen an der Stützstruktur angepasst, dass zumindest ein Teil der Zugkraftübertragungseinrichtung relativ zu der Stützstruktur freischwingend ist. Dies heißt insbesondere, dass zumindest ein Teil der Zugkraftübertragungseinrichtung sich frei und unabhängig von der Stützstruktur bewegen kann.

Die Seilbefestigungseinrichtung ist mit der Zugkraftübertragungseinrichtung gekoppelt, so dass ein Seil mit der Stützstruktur verbunden werden kann. Die freischwingende Zugkraftübertragungseinrichtung sorgt dann dafür, dass keine Druckkräfte von der Stützstruktur an das Seil übertragen werden. Ferner bleibt der Winkel zwischen der Seilrichtung, d. h. die Richtung der Tangente des Seils an der Position, wo das Seil an der Seilbefestigungseinrichtung befestigt ist, und die Längsachse der Seilbefestigungseinrichtung unverändert, wenn sich die Stützstruktur bewegt. Somit wird Abreibung und Abknicken des Seils an der Befestigung dessen an der Seilbefestigungseinrichtung vermieden. Gemäß einem weiteren Ausführungsbeispiel der Erfindung ist die Zugkraftübertragungseinrichtung derart angepasst, dass sie an einem Baum oder einer aufrechten Stange befestigbar ist.

Dies bedeutet insbesondere, dass die Stützstruktur aus einem Baum oder einer aufrechten Stange bestehen kann. Der Baum oder die Stange kann beispielsweise Bestandteil eines Klettergartens sein.

Gemäß einem weiteren Ausführungsbeispiel der Erfindung weist die Zugkraftübertragungseinrichtung ein Seil, flexibles Band oder eine Kette auf, das bzw. die mittels eines Halteelements in einer vorgegebenen Position an der Stützstruktur zumindest teilweise freischwingend befestigbar ist.

Das Halteelement kann beispielsweise eine Aussparung direkt in der Oberfläche der Stützstruktur sein, oder es kann aus einem harten Material bestehen, wie zum Beispiel Holz oder Metall, das eine oder mehrere Aussparungen aufweist und an der Oberfläche der Stützstruktur angebracht werden kann. Das Seil (oder die Kette) kann dann in die Aussparung eingelegt werden und durch Verspannung dort festgehalten werden.

Gemäß einem weiteren Ausführungsbeispiel der Erfindung umschließt die Zugkraftübertragungseinrichtung die Stützstruktur.

Dadurch kann ein Kontaktpunkt oder Kontaktbereich der Zugkraftübertragungseinrichtung (das Seil, flexible Band oder die Kette) auf der Stützstruktur ohne zusätzliche Halteelemente festgehalten werden.

Das Seilführungselement besteht beispielsweise aus einer Rohrhülse in der ein Ende des Sicherungsseils empfangen bzw. eingefädelt werden kann, so dass das Seilende sicher befestigt wird.

Das Koppelelement besteht beispielsweise aus einem Metallelement, das beispielsweise mittels Löcher mit der Zugkraftübertragungseinrichtung gekoppelt werden kann.

Das Verbindungselement besteht beispielsweise aus einer länglichen Konsole. Diese weist beispielsweise einen Spalt in der Längsrichtung auf, der zum Empfangen eines schwertförmigen Teils des Seilführungselements angepasst ist. Das schwertförmige Teil des Seilführungselements weist beispielsweise Löcher auf, die eine feste Verbindung des Seilführungselements mit der Konsole mittels Schrauben oder Bolzen ermöglichen. Die Verbindung des Verbindungselements (der Konsole) mit dem Koppelelement kann auch mittels Schrauben oder Bolzen erfolgen.

Gemäß dem Aspekt der Erfindung weist das Koppelelement einen Haken auf, welcher insbesondere mittels eines (zum Rand des Koppelelements hin) offenen Schlitzlochs gebildet wird. Die Zugkraftübertragungseinrichtung ist an dem Haken koppelbar, um eine Zugkraft zwischen der Zugkraftübertragungseinrichtung und dem Koppelelement zu übertragen. Die Zugkraftübertragungseinrichtung ist insbesondere als Seil bzw. Drahtseil ausgebildet und kann eine Schlaufe an dessen Ende aufweisen. Die Schlaufe ist über den Haken gestülpt, so dass eine Zugkraft übertragen werden kann.

Gemäß einer weiteren beispielhaften Ausführungsform der vorliegenden Erfindung weist die Vorrichtung eine Sicherungsschraube auf, welche an dem Haken derart anbringbar ist, dass eine offene Seite des Hakens mittels der Sicherungsschraube verschließbar ist, so dass ein Lösen der Zugkraftübertragungseinrichtung von dem Koppelelement verhinderbar ist.

Das Koppelelement kann hierzu einen Schlitz bzw. das oben beschriebene Schlitzloch aufweisen, welches zum Rand des Koppelelements hin offen ist und sozusagen eine offene Seite aufweist. Somit bildet das Koppelelement den Haken. An der offenen Seite des Schlitzlochs kann die Sicherungsschraube, welche beispielsweise als Gewindeschraube mit einer zugehörigen Mutter ausgebildet ist, befestigt werden, sodass die offene Seite des Schlitzlochs geschlossen werden kann. Somit kann nach dem Befestigen der Zugkraftübertragungseinrichtung an dem Haken ein Herausrutschen der Zugkraftübertragungseinrichtung, insbesondere bei einer Kraft entgegen der Zugkraftrichtung der Zugkraft, verhindert werden.

Gemäß einem weiteren Ausführungsbeispiel der Erfindung sind das Seilführungselement, das Koppelelement und das Verbindungselement lösbar miteinander verbunden.

Dadurch wird es beispielsweise möglich, Elemente bei Bedarf einzeln auszutauschen. Insbesondere kann ein abgenutztes Seil auf einfache Weise ersetzt werden, ohne dass die restlichen Elemente entfernt oder auf sonstige Weise bearbeitet werden müssen.

Gemäß einem weiteren Ausführungsbeispiel der Erfindung ist die räumliche Anordnung zwischen Seilführungselement, Koppelelement und/oder Verbindungselement verstellbar.

Dies kann insbesondere dadurch erreicht werden, dass das schwertförmige Teil des Seilführungselements eine Mehrzahl von Löchern aufweist. Durch Verschieben des schwertförmigen Teils in dem Spalt des Verbindungselements kann die Position des Seilendes relativ zu dem Verbindungselement verstellt werden. Eine solche Verstellung kann insbesondere Vorteilhaft sein, wenn die Stützstruktur, insbesondere einen Baum, nach einem Sturm verschoben worden ist.

Gemäß einem weiteren Ausführungsbeispiel der Erfindung ist die Seilbefestigungseinrichtung einstückig gebildet.

Dies kann eine kostengünstige Variante darstellen, die unter Umständen zu bevorzugen ist.

Gemäß einem weiteren Ausführungsbeispiel der Erfindung ist die Seilbefestigungseinrichtung angepasst zum Befestigen eines weiteren Seils, das um zumindest einen Teil des Umfangs der Stützstruktur in einem vorgegebenen Abstand von der Stützstruktur herumführbar ist.

Das weitere Seil stellt beispielsweise eine Fortsetzung des (ersten) Seils dar. Wenn das weitere Seil um einen Teil des Umfangs der Stützstruktur herumgeführt ist, kann das weitere Seil eine Art Bypass darstellen. Mit anderen Worten wird es beispielsweise einem Gast in einem Klettergarten ermöglicht, sein Weg um ein Baum herum und gegebenenfalls weiter auf der anderen Seite des Baums fortzuführen ohne seine Befestigung zum Seilläufer betätigen zu müssen.

Das weitere Seil kann beispielsweise mittels einer Rohrhülse an der Seilbefestigungsvorrichtung befestigt werden.

Gemäß einem weiteren Aspekt der Erfindung wird ein System mit einem Seil, insbesondere einem Sicherungsseil, einer Stützstruktur und einer Vorrichtung gemäß dem vorhergehenden Aspekt der Erfindung oder einem der vorhergehenden Ausführungsbeispiele der Erfindung beschrieben.

Dem beschriebenen System liegt die Erkenntnis zugrunde, dass, wenn zumindest ein Teil der Zugkraftübertragungseinrichtung freischwingend ist, eine Veränderung der Winkel zwischen Seilrichtung und einer Längsachse der Seilbefestigungseinrichtung aufgrund von Bewegung der Stützstruktur vermieden werden kann. Somit wird Reibung zwischen die Seilbefestigungseinrichtung und das Seil sowie Biegung des Seils aufgrund von Bewegung der Stützstruktur vermieden.

Des Weiteren ermöglicht das beschriebene System einen modularen Aufbau eines Sicherungssystems in einem Klettergarten. Mit anderen Worten werden einzelne Sicherungsseile zwischen den jeweiligen Bäumen oder aufrechten Stangen aufgehängt. So lässt sich ein Seil bei Bedarf leicht austauschen. Ferner lassen sich mit denselben Komponenten beliebige Kombinations-Winkel im Seilverlauf arrangieren.

Gemäß einem weiteren Ausführungsbeispiel der Erfindung weist das System ferner eine Bypasseinrichtung auf, die ein weiteres Seil aufweist, das an der Seilbefestigungseinrichtung befestigt und um zumindest einen Teil des Umfangs der Stützstruktur in einem vorgegebenen Abstand von der Stützstruktur herumgeführt ist.

Diese Bypasseinrichtung ermöglicht eine direkte Weiterführung des Sicherungsseils um die Stützstruktur, zum Beispiel ein Baum, herum.

Gemäß einem weiteren Ausführungsbeispiel der Erfindung ist die Bypasseinrichtung derart ausgebildet, dass ein Läufer um die Stützstruktur herumführbar ist.

Dadurch wird es beispielsweise einem Gast in einem Klettergarten ermöglicht, sein Weg um ein Baum herum und gegebenenfalls weiter auf der anderen Seite des Baums fortzuführen ohne seine Befestigung zum Seilläufer betätigen (lösen oder umhängen) zu müssen. Der Seilläufer kann nach dem Erreichen des Endes des Sicherungsseils ohne weiteres entlang des weiteren Seils weitergeführt werden.

Gemäß einem weiteren Ausführungsbeispiel der Erfindung weist das System ferner zumindest ein Stützelement zum Stützen des weiteren Seils auf, wobei das zumindest ein Stützelement an der Stützstruktur angebracht ist.

Das zumindest eine Stützelement kann beispielsweise eine Rohrhülse aufweisen, die mittels eines Abstandsstücks an der Stützstruktur befestigt ist. Das weitere Seil wird durch die Rohrhülse geführt und verläuft somit in Umfangsrichtung der Stützstruktur in einem (durch das Abstandsstück) vorgegebenen Abstand dazu.

Das weitere Seil kann z.B. durch einen Gewindeanschluss kraftschlüssig an das Seilende des Spannseiles (Sicherungsseiles) verbunden werden. Dadurch entsteht eine weitere Sicherheit gegen Lösen des Seiles und gegen unbeabsichtigtes Herausfahren des Seilläufers aus dem Spannseil.

Es wird darauf hingewiesen, dass Ausführungsformen der Erfindung mit Bezug auf unterschiedliche Erfindungsgegenstände beschrieben wurden. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung einer derzeit bevorzugten Ausführungsform.
Figur 1 zeigt eine beispielhafte Ausführungsform zum besseren Verständnis der Erfindung.
Fig. 2 zeigt ein Koppelelement mit einer länglichen Konsole gemäß einer beispielhaften Ausführungsform der vorliegenden Erfindung.
Fig. 3 zeigt eine weitere Darstellung eines Koppelelements mit einer Konsole gemäß einer beispielhaften Ausführungsform der vorliegenden Erfindung.

Es wird darauf hingewiesen, dass die nachfolgend beschriebene Ausführungsform lediglich eine beschränkte Auswahl an möglichen Ausführungsvarianten der Erfindung darstellt.

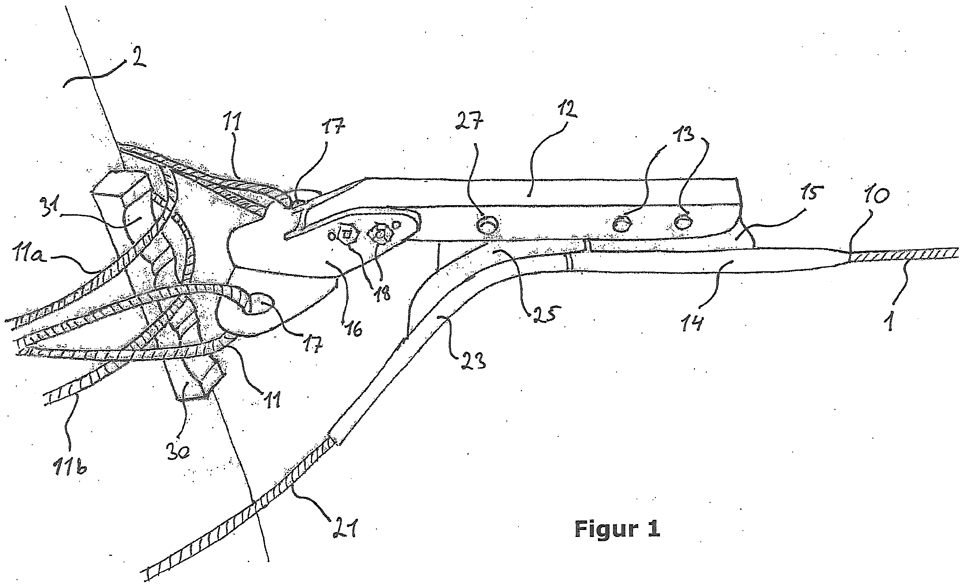

Figur 1 zeigt eine Vorrichtung zum Befestigen eines Sicherungsseils 1 an einem Baum 2. Die Vorrichtung weist Seile 11 auf, die als Zugkraftübertragungseinrichtung dienen. Die Vorrichtung weist ferner eine Seilbefestigungseinrichtung auf, die eine Konsole 12, eine Rohrhülse 14 und ein Koppelelement 16 aufweist. Das Sicherungsseil 1 ist in der Rohrhülse 14 befestigt. Die Rohrhülse 14 weist einen schwertförmigen Teil 15 auf, die in einem Spalt (nicht gezeigt) der Konsole 12 hineinpasst und dort mittels Schrauben/Bolzen 13 befestigt ist. Das Koppelelement 16 ist mittels Bolzen 18 mit der Konsole Verbunden und mittels Löcher 17 mit dem Seil 11 verbunden.

Das Seil 11 ist um den Baum 2 herumgeführt. Auf der anderen Seite des Baums 2 ist eine weitere (nicht gezeigte) Vorrichtung angebracht. Diese weitere Vorrichtung weist Seilen 11a und 11b auf, die als Zugkraftübertragungseinrichtung für diese weitere Vorrichtung dienen. Die Seile 11a und 11b legen an dem Halteelement 30 an. Das Halteelement 30 weist Aussparungen 31 auf, die verhindern, dass die Seile 11a und 11b sich nach unten verschieben. Das Halteelement 30 ist an dem Baum befestigt, zum Beispiel mittels Nägel, Bolzen o.ä. (nicht gezeigt). Auf der anderen (nicht gezeigten) Seite vom Baum 2 ist ein oder mehrere Halteelemente 30 auf ähnliche Weise angeordnet, um die Seile 11 der gezeigten Vorrichtung zu halten.

Durch diese Befestigung an dem Baum 2 sind die Seile 11 teilweise freischwingend in sowohl horizontaler als auch vertikaler Richtung. Dies führt dazu, dass die Längsachse der Rohrhülse 14 und die Tangentenrichtung des Sicherungsseils 1 in dem Punkt 10 parallel verbleiben, wenn der Baum beispielsweise durch einen Sturm bewegt wird. Somit entsteht keine Abnutzung des Seils 11 bei dem Übergang 10 zur Rohrhülse 14.

Die Schrauben 13 erlauben es, die Konsole 12 und die Rohrhülse 14 in einfacher Weise voneinander zu lösen. Dadurch kann das Seil 1 leicht ersetzt werden. Ferner kann die Position der Rohrhülse 14 in der Längsrichtung der Konsole 12 versetzt werden, da der schwertförmige Teil mehrere Löcher (nicht gezeigt) aufweist. Dies ist insbesondere vom Vorteil nach einem Sturm, wenn die Stellung bzw. Neigung des Baums 2 sich möglicherweise verändert hat, was die Spannung des Sicherungsseils 1 beeinflusst.

Die Vorrichtung weist ferner ein Bypass-Seil 21 auf, das in einer weiteren Rohrhülse 23 befestigt ist. Die weitere Rohrhülse 23 weist einen schwertförmigen Teil 25 auf, der mit der Schraube 27 in dem (nicht gezeigten) Spalt der Konsole 12 befestigt ist. Das Bypass-Seil 21 läuft um den Baum 2 herum und ermöglicht, dass ein Seilläufer zur anderen Seite des Baums 2 mitgeführt werden kann, oder mit anderen Worten, dass ein Seilläufer, der nach links auf dem Sicherungsseil 1 läuft, entlang der Rohrhülsen 14 und 23 und des Bypass-Seils 21 um den Baum herum weiterlaufen kann.

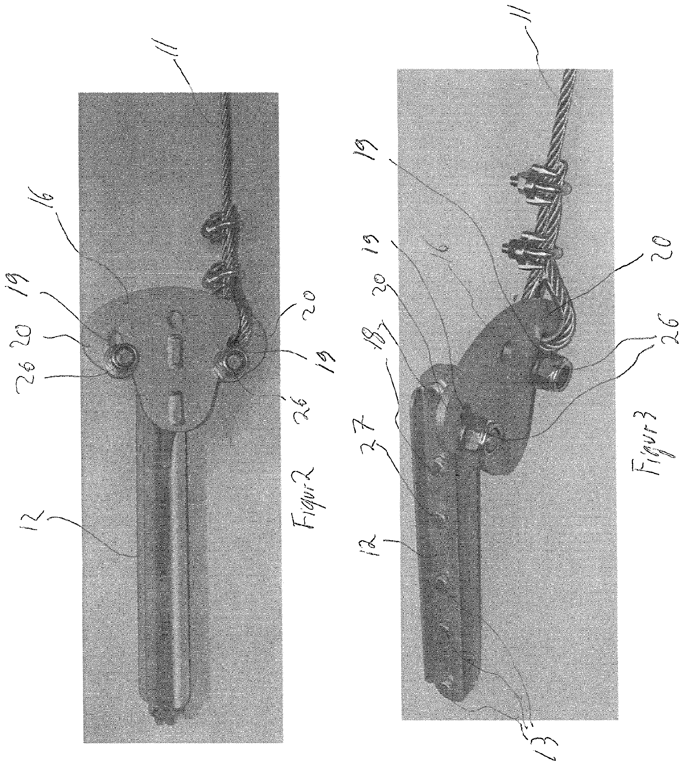

Fig. 2 zeigt eine weitere Darstellung der Konsole 12 und das Koppelelement 16 als Teil der Seilbefestigungseinrichtung. Das Koppelelement 16 weist zwei Schlitze (Schlitzlöcher) 19 auf. Die Schlitze 19 sind derart ausgebildet, dass diese von außerhalb des Koppelelements 16 durch eine offene Seite zugänglich sind. Mit anderen Worten weisen die Schlitze (Schlitzlöcher) 19 zum Rand des Koppelelements 16 eine offene Seite auf. Zwischen den Schlitzen 19 und dem Außenbereich des Koppelelements 16 werden somit Haken 20 ausgebildet. Eine Schlaufe des Seils 11 kann beispielsweise über die Haken 20 gestülpt werden, so dass die Schlaufen der Seile 11 an dem Koppelelement derart koppelbar sind, dass eine Zugkraft zwischen dem Seil 11 als Zugkraftübertragungseinrichtung und dem Koppelelement 16 als Teil der Seilbefestigungseinrichtung übertragbar ist. Das Seil kann anstatt einer Schlaufe auch kettenartige Glieder aufweisen, welche wahlweise in den Haken 20 eingehängt werden. Ferner kann das gesamte Seil 11 als Kette ausgebildet sein.

Das Koppelelement 16 ist insbesondere ein plattenförmiges Element. In die Schlitze 19 können jeweils entsprechende Sicherungsschrauben 26 eingeschoben werden. Die Sicherungsschraube 26 ist beispielsweise eine Gewindeschraube mit einer Mutter. Zwischen Schraubenkopf und Mutter ist das plattenförmige Koppelelement 16 eingeführt. Somit kann die Sicherungsschraube 26 angezogen werden, so dass eine relative Verschiebung zwischen der Sicherungsschraube 26 und dem Koppelelement 16 unterbunden wird. Die Sicherungsschraube 26 ist sozusagen derart am Haken 20 bzw. im Schlitz 19 anbringbar, dass eine offene Seite des Hakens 20 bzw. des Schlitzes 19 mittels der Sicherungsschraube 26 verschließbar ist, so dass ein Lösen der Zugkraftübertragungseinrichtung bzw. des Seils 11 von dem Koppelelement 16 verhindert wird.

Somit wird ein einfacher und schnell zu öffnender bzw. schließender Befestigungsmechanismus zwischen den Seilen 11 und dem Koppelelement 16 geschaffen. Die Schlaufen der Seile 11 können in einfacher Art und Weise schnell über den Haken 20 geschoben werden und in dem Schlitz 19 platziert werden. Mittels einer einfachen Sicherungsschraube 26 kann das Seil 11 gesichert werden. Somit kann zügig die Vorrichtung installiert werden.

Ferner zeigt Fig. 2 die Konsole 12, welche an dem Koppelelement 16 befestigt ist. Die Konsole 12 kann beispielsweise als C-Profil ausgebildet werden.

Fig. 3 zeigt die beispielhafte Ausführungsform aus Fig. 2 in einer unterschiedlichen Darstellung. In Fig. 3 wird erneut das Koppelelement 16 dargestellt, welches mittels Schlitzen 19 die entsprechenden Haken bildet. Die Schlitze 19 werden mittels der Sicherungsschrauben 26 geschlossen. Das Seil 11 kann in einfacher Art und Weise an dem Haken 20 befestigt werden. Ferner zeigt Fig. 3 das C-Profil der Konsole 12. Das C-Profil der Konsole 12 weist beispielsweise zwei beabstandete Stege auf, welche mittels einer Grundfläche verbunden sind. An der Grundfläche sind Bohrungen ausgebildet, durch welche beispielsweise die Bolzen 18 geführt werden können, welche das Koppelelement 16 mit der Konsole 12 verbinden. Ferner kann die Grundfläche weitere Bohrungen aufweisen, an welche die Schrauben 13 befestigt sind, welche den schwertförmigen Teil 15 der Rohrhülse 14 befestigen. Zudem kann eine weitere Bohrung die Schrauben 27 aufnehmen, welche eine weitere Rohrhülse 23 zum Befestigen des Bypass-Seils 21 (siehe Fig. 1) befestigen können.

### Bezugszeichenliste

- 1: Sicherungsseil
- 2: Baum
- 10: Punkt
- 11: Seil
- 11a: Seil
- 11b: Seil
- 12: Konsole
- 13: Schraube/Bolzen
- 14: Rohrhülse
- 15: Schwertförmiger Teil
- 16: Koppelelement
- 17: Loch
- 18: Schraube/Bolzen
- 19: Schlitz
- 20: Haken
- 21: Bypass-Seil
- 23: Rohrhülse
- 25: Schwertförmiger Teil
- 26: Sicherungsschraube
- 27: Schraube/Bolzen
- 30: Halteelement
- 31: Aussparung

## Patentansprüche

1. Vorrichtung zum Befestigen eines Seils an einer Stützstruktur, wobei die Vorrichtung aufweist:
ein Seil (11), ein flexibles Band oder eine Kette als Zugkraftübertragungseinrichtung, die zum Befestigen an der Stützstruktur derart angepasst ist, dass zumindest ein Teil der Zugkraftübertragungseinrichtung in zwei Achsen freischwingend ist, und
eine Seilbefestigungseinrichtung, die mit der Zugkraftübertragungseinrichtung gekoppelt ist und an der ein weiteres Seil befestigbar ist,
wobei die Seilbefestigungseinrichtung eine Rohrhülse (14) als Seilführungselement zum Aufnehmen des weiteren Seils, wobei in Rohrhülse (14) ein Ende des weiteren Seils empfangen werden kann, so dass das Seilende des weiteren Seils sicher befestigbar ist, ein Koppelelement (16) zum Koppeln der Seilbefestigungseinrichtung und der Zugkraftübertragungseinrichtung und eine längliche Konsole (12) als Verbindungselement, welche die Rohrhülse (14) als Seilführungselement mit dem Koppelelement (16) verbindet, aufweist,
wobei das Koppelelement (16) einen Haken (20) aufweist,
wobei die Zugkraftübertragungseinrichtung an dem Haken (20) koppelbar ist, um eine Zugkraft zwischen der Zugkraftübertragungseinrichtung und dem Koppelelement (16) zu übertragen,
wobei die Seilbefestigungseinrichtung mit der Zugkraftübertragungseinrichtung derart gekoppelt ist, dass ein Winkel zwischen einer Seilrichtung eines an der Seilbefestigungseinrichtung befestigten Seils und einer Längsachse der Seilbefestigungseinrichtung unverändert bleibt, wenn sich die Stützstruktur bewegt, an der die Zugkraftübertragungseinrichtung befestigt ist.

2. Vorrichtung gemäß Anspruch 1, wobei die Zugkraftübertragungseinrichtung derart angepasst ist, dass sie an einem Baum (2) oder einer aufrechten Stange befestigbar ist.

3. Vorrichtung gemäß Anspruch 1 oder 2, wobei das Seil (11), das flexible Band oder die Kette mittels eines Halteelements (30) in einer vorgegebenen Position an der Stützeinrichtung zumindest teilweise freischwingend befestigbar ist.

4. Vorrichtung gemäß Anspruch 3, wobei die Zugkraftübertragungseinrichtung die Stützeinrichtung umschließt.

5. Vorrichtung gemäß einem der Ansprüche 1 bis 4,
wobei der Hakenmittels eines zum Rand des Koppelelements hin offenen Schlitzlochs gebildet wird.

6. Vorrichtung gemäß einem der Ansprüche 1 bis 5, ferner aufweisend
eine Sicherungsschraube (26), welche an dem Haken (20) derart anbringbar ist, dass eine offene Seite des Hakens (20) mittels der Sicherungsschraube (26) verschließbar ist, so dass ein Lösen der Zugkraftübertragungseinrichtung von dem Koppelelement (16) verhinderbar ist.

7. Vorrichtung gemäß einem der Ansprüche 1 bis 6, wobei das Seilführungselement, das Koppelelement (16) und das Verbindungselement lösbar miteinander verbunden sind.

8. Vorrichtung gemäß einem der Ansprüche Anspruch 1 bis 7, wobei die räumliche Anordnung zwischen Seilführungselement, Koppelelement (16) und/oder Verbindungselement verstellbar ist.

9. Vorrichtung gemäß einem der Ansprüche 1 bis 6, wobei die Seilbefestigungseinrichtung einstückig gebildet ist.

10. Vorrichtung gemäß einem der Ansprüche 1 bis 9, wobei die Seilbefestigungseinrichtung angepasst ist zum Befestigen eines weiteren Seils, das um zumindest einen Teil des Umfangs der Stützstruktur in einem vorgegebenen Abstand von der Stützstruktur herumführbar ist.

11. System mit einem Seil, einer Stützstruktur und einer Vorrichtung gemäß einem der Ansprüche 1 bis 10.

12. System gemäß Anspruch 11, das ferner eine Bypasseinrichtung aufweist, die ein weiteres Seil aufweist, das an der Seilbefestigungseinrichtung befestigt und um zumindest einen Teil des Umfangs der Stützstruktur in einem vorgegebenen Abstand von der Stützstruktur herumgeführt ist.

13. System gemäß Anspruch 12, wobei die Bypasseinrichtung derart ausgebildet ist, dass ein Läufer um die Stützstruktur herumführbar ist.

14. System gemäß Anspruch 12 oder 13, das ferner zumindest ein Stützelement zum Stützen des weiteren Seils aufweist, wobei das zumindest eine Stützelement an der Stützstruktur angebracht ist.

## Claims

1. Device for mounting a rope on a support structure, the device comprising:
a rope (11), a flexible strip or a chain as a pull force transmission arrangement which is adapted in such a manner for mounting on the support structure that at least one part of the pull force transmission arrangement is free swinging around two axes, and
a rope mounting arrangement which is coupled with the pull force transmission arrangement and at which a further rope is mountable,
wherein the rope mounting arrangement comprises
a pipe sleeve (14) as a rope mounting arrangement for including the further rope, wherein in the pipe sleeve (14) an end of the further rope could be received such that the rope end of the further rope is mountable safely,
a coupling element (16) for coupling the rope mounting arrangement and the pull force transmission arrangement and an elongated console (12) as a connection element which connects the pipe sleeve (14) as a rope guiding element with the coupling element (16),
wherein the coupling element (16) comprises a hook (20),
wherein the pull force transmission arrangement is coupleable with the hook (20) for transmitting a pull force between the pull force transmission arrangement and the coupling element (16),
wherein the rope mounting arrangement is coupled with the pull force transmission arrangement in such a manner that an angle between a rope direction of one rope mounted on the rope mounting arrangement and a longitudinal axis of the rope mounting arrangement remain unchanged if the support structure moves, at which the pull force transmission arrangement is mounted.

2. Device according to claim 1,
wherein the pull force transmission arrangement is adapted in such a manner that it is mountable on a tree (2) or a upstanding rod.

3. Device according to claim 1 or 2,
wherein the rope (11), the flexible strip or the chain is mountable at least partly free swinging by a holding element (30) in a predetermined position at the support arrangement.

4. Device according to claim 3,
wherein the pull force transmission arrangement surrounds the support arrangement.

5. Device according to one of the claims 1 to 4,
wherein the hook is formed by a towards to the edge of the coupling element opened slot hole.

6. Device according to one of the claims 1 to 5, further comprising
a safety screw (26) which is fixable to the hook (20) in such a manner that an open side of the hook (20) is lockable by the safety screw (26) such that a release of the pull force transmission arrangement of the coupling element is preventable.

7. Device according to one of the claims 1 to 6,
wherein the rope guiding element, the coupling element (16) and the connection element are connected releasable with each other.

8. Device according to one of the claims 1 to 7,
wherein the spatial arrangement between the rope guiding element, coupling element (16) and/or connection element is adjustable.

9. Device according to one of the claims 1 to 6,
wherein the rope mounting arrangement is formed in one piece.

10. Device according to one of the claims 1 to 9,
wherein the rope mounting arrangement is adapted for mounting a further rope which is passable around at least one part of the perimeter of the support structure in a predetermined distance from the support structure.

11. System with a rope, a support structure and a device according to one of the claims 1 to 10.

12. System according to claim 11, further comprising
a bypass arrangement which comprises a further rope which is mounted on the rope mounting arrangement and is passed around at least one part of the perimeter of the support structure in a predetermined distance of the support structure.

13. System according to claim 12,
wherein the bypass arrangement is formed in such a manner that a runner is passable around the support structure.

14. System according to claim 12 or 13, further comprising
at least one support element for supporting the further rope,
wherein the at least one support element is fixed to the support structure.

## Revendications

1. Dispositif pour fixer un câble au niveau d'une structure d'appui, **caractérisé en ce que** le dispositif présente :
un câble (11), une bande flexible ou une chaîne en tant que système de transmission de force de traction, qui est adapté pour la fixation au niveau de la structure d'appui de telle manière qu'au moins une partie du système de transmission de force de traction est à oscillation libre dans deux axes, et
un système de fixation de câble, qui est couplé au système de transmission de force de traction et au niveau duquel un autre câble peut être fixé,
le système de fixation de câble présentant un manchon tubulaire (14) en tant qu'élément de guidage de câble pour recevoir un autre câble, une extrémité de l'autre câble pouvant être reçue dans le manchon tubulaire (14) de sorte que l'extrémité de câble de l'autre câble puisse être fixée en toute sécurité, un élément de couplage (16) pour coupler le système de fixation de câble et le système de transmission de force de traction et une console (12) allongée en tant qu'élément de liaison, qui relie le manchon tubulaire (14) en tant qu'élément de guidage de câble à l'élément de couplage (16),
l'élément de couplage (16) présentant un crochet (20),
le système de transmission de force de traction pouvant être couplé au crochet (20) pour transmettre une force de traction entre le système de transmission de force de traction et l'élément de couplage (16),
le système de fixation de câble étant couplé au système de transmission de force de traction de telle manière qu'un angle entre une direction de câble d'un câble fixé au niveau du système de fixation de câble et un axe longitudinal du système de fixation de câble reste inchangé quand la structure d'appui se déplace, au niveau de laquelle le système de transmission de force de traction est fixé.

2. Dispositif selon la revendication 1, **caractérisé en ce que** le système de transmission de force de traction est adapté de telle manière qu'il peut être fixé au niveau d'un arbre (2) ou d'une barre verticale.

3. Dispositif selon la revendication 1 ou 2, **caractérisé en ce que** le câble (11), la bande flexible ou la chaîne peut être fixé(e) au moins en partie en oscillation libre au moyen d'un élément de maintien (30) dans une position prédéfinie au niveau du système d'appui.

4. Dispositif selon la revendication 3, **caractérisé en ce que** le système de transmission de force de traction renferme le système d'appui.

5. Dispositif selon l'une quelconque des revendications 1 à 4,
**caractérisé en ce que** le crochet est formé au moyen d'un trou fendu ouvert en direction du bord de l'élément de couplage.

6. Dispositif selon l'une quelconque des revendications 1 à 5, présentant en outre
une vis de blocage (26), qui peut être installée de telle manière au niveau du crochet (20) qu'un côté ouvert du crochet (20) peut être fermé au moyen de la vis de blocage (26) de sorte qu'un détachement du système de transmission de force de traction de l'élément de couplage (16) puisse être empêché.

7. Dispositif selon l'une quelconque des revendications 1 à 6, **caractérisé en ce que** l'élément de guidage de câble, l'élément de couplage (16) et l'élément de liaison sont reliés les uns aux autres de manière détachable.

8. Dispositif selon l'une quelconque des revendications 1 à 7, **caractérisé en ce que** l'agencement spatial entre l'élément de guidage de câble, l'élément de couplage (16) et/ou l'élément de liaison peut être ajusté.

9. Dispositif selon l'une quelconque des revendications 1 à 6, **caractérisé en ce que** le système de fixation de câble est formé d'un seul tenant.

10. Dispositif selon l'une quelconque des revendications 1 à 9, **caractérisé en ce que** le système de fixation de câble est adapté pour fixer un autre câble, qui peut être guidé tout autour d'au moins une partie de la périphérie de la structure d'appui à une distance prédéfinie de la structure d'appui.

11. Système avec un câble, une structure d'appui et un dispositif selon l'une quelconque des revendications 1 à 10.

12. Système selon la revendication 11, qui présente en outre un système de dérivation, qui présente un autre câble, qui est fixé au niveau du système de fixation de câble et guidé tout autour d'au moins une partie de la périphérie de la structure d'appui à une distance prédéfinie de la structure d'appui.

13. Système selon la revendication 12, **caractérisé en ce que** le système de dérivation est réalisé de telle manière qu'un induit peut être guidé tout autour de la structure d'appui.

14. Système selon la revendication 12 ou 13, qui présente en outre au moins un élément d'appui pour l'appui de l'autre câble, **caractérisé en ce que** l'au moins un élément d'appui est installé au niveau de la structure d'appui.
